# FASCICULE DE BREVET EUROPEEN

(11) **EP 3 884 105 B1**
(45) Date de publication et mention de la délivrance du brevet: **01.01.2025**
(21) Numéro de dépôt: 19820993.4
(22) Date de dépôt: 21.11.2019
(51) Int. Cl.: E01F 13/00, H04B 7/00, H04W 88/00

(54) **BLOC A FONCTION D'ANTI-FRANCHISSEMENT ET CONNECTE**
POLLER MIT ZUTRITTSVERWEIGERUNG UND EINER ANGESCHLOSSENEN FUNKTION
BOLLARD HAVING AN ACCESS-DENIAL AND A CONNECTED FUNCTION

(30) Priorité: 21.11.2018 FR 1871679
(43) Date de publication de la demande: 29.09.2021
(73) Titulaire: Feghoul, Abdla, 33610 Cestas (FR)
(72) Inventeur: Feghoul, Abdla, 33610 Cestas (FR)
(74) Mandataire: Aquinov
(86) Numéro de dépôt international: PCT/EP2019/082148
(87) Numéro de publication internationale: WO 2020/104620

(56) Documents cités:
- WO-A1-2018/138276
- CN-A- 107 830 478
- CN-A- 108 800 014
- CN-U- 206 308 640
- CN-U- 207 362 756
- CN-U- 207 380 899
- KR-A- 20160 024 036

## Description

L'invention concerne le domaine des blocs de béton utilisés en tant que dispositifs de protection (de sécurité) et d'anti-intrusion/anti-franchissement, en particulier destinés à être installés de manière provisoire sur la voie publique ou dans des lieux de manifestations, à être installés en extérieur dans des lieux de circulation de personnes et de véhicules.

L'invention sera plus particulièrement décrite, sans toutefois y être limitée, en regard d'une utilisation pour la protection civile en tant que dispositifs de protection et d'anti-franchissement à installer en périphérie de lieux susceptibles d'accueillir de nombreuses personnes, tel que lors de manifestations temporaires, pour stopper tous véhicules tentant de foncer dans les lieux.

On entend par « installés de manière provisoire », le fait que les blocs ne soient pas scellés au sol de manière inamovible. Les blocs de l'invention sont amovibles, déplaçables. Les blocs, tout en étant amovibles peuvent rester au sol le temps souhaité par l'utilisateur. Récemment, le Demandeur a mis au point des blocs de béton à fonction d'anti-franchissement qui sont décrits dans la demande de brevet FR3062142. Ces blocs de béton présentent des dimensions et une forme les rendant particulièrement efficaces pour assurer la fonction d'anti-franchissement.

L'invention a pour but de proposer un perfectionnement à ce type de blocs d'anti-franchissement.

Dans la suite de la description, les termes « horizontal », « vertical », « supérieur », « inférieur », « haut », « bas », « hauteur » sont utilisés dans le cadre d'une installation normale d'un bloc, c'est-à-dire relatif à une notion verticale par rapport à un sol horizontal sur lequel serait posé le bloc.

Selon l'invention, le bloc d'anti-franchissement en béton (le bloc étant apte à être déplacé pour son installation au sol) comporte des moyens de communication à distance sans fil et constitue ainsi un objet connecté, en particulier pour se connecter à un réseau Internet en vue de se connecter à au moins un serveur.

Dans un exemple d'utilisation, une personne s'approchant du bloc connecté peut, via son smartphone doté d'une application logicielle dédiée, visualiser diverses informations en fonction de la géolocalisation du bloc et/ou de l'identification automatisée du bloc. A titre d'exemples nullement limitatifs, les informations peuvent porter sur de l'événementiel, le tourisme, le transport, le lieu (la ville) d'emplacement du bloc.

De plus, la fonction d'objet connecté peut permettre le téléchargement de publicités sur des écrans du type de smartphone lorsqu'un passant se connecte sur une application en lien avec les blocs de l'invention, ce qui aiderait pour certaines municipalités à financer l'installation de ces blocs dont la fonction première est celle d'anti-franchissement pour la sécurité de personnes.

Le bloc peut être tracé à distance. En particulier, le bloc comporte un système de géolocalisation.

Selon une caractéristique, le bloc d'anti-franchissement comporte au moins un boîtier, amovible par rapport à un logement d'accueil dans le bloc ou bien intégré au bloc lors de la fabrication, constituant un logement de protection pour les moyens de communication à distance et toute électronique embarquée, de préférence ce volume étant inaccessible de l'extérieur du bloc en position installée du bloc sur le sol.

De préférence, le bloc comporte des moyens électroniques de traitement de données combinés aux moyens de communication afin de traiter les données reçues ou envoyées auxdits moyens de communication, et de préférence un système de géolocalisation et/ou des moyens d'identification (à distance) dudit bloc d'anti-franchissement.

Avantageusement, le bloc comporte donc des moyens d'identification dudit bloc d'anti-franchissement, de préférence une étiquette électronique du type tag NFC. Ainsi, la logistique d'une multitude de blocs est facilitée. Les moyens d'identification comportent de préférence une étiquette électronique du type tag NFC (pour « Near Field Communication » en anglais, ou communication en champ proche) actif et/ou passif, et/ou un QR Code et/ou un puce RFID. Selon une autre caractéristique, le bloc comporte des moyens de détection de mouvement dudit bloc, et en ce que les moyens de détection de mouvement sont aptes à communiquer avec les moyens de communication à distance sans fil dudit bloc qui sont aptes à transmettre à distance que le bloc est en train d'être déplacé/bougé. Ainsi, il est possible à distance de sécuriser le déplacement ou le vol d'un bloc. De préférence, dans cette réalisation, le bloc comporte au moins un identifiant, et de préférence en outre un système de géolocalisation.

Avantageusement, le bloc comporte des équipements à base d'électronique procurant des fonctions techniques tels que de manière non exhaustive un réseau de diffusion wifi public, des capteurs (par exemple détecteurs de mouvement, détecteurs de présence, d'ouverture de barrière lorsqu'une barrière est fixée au bloc), des caméras (par exemple pour filmer l'environnement extérieur, lire des plaques d'immatriculation passant devant le bloc), des alarmes (avec plusieurs niveaux d'indication visuels et sonores), des haut-parleurs permettant de diffuser des messages audio à distance, des affichages électroniques tels que panneaux d'affichage (notamment publicitaire à diodes électroluminescentes) dont la gestion d'affichage peut être réalisée à distance, des éclairages.

Les moyens électroniques du type cartes électronique sont avantageusement logés dans un boîtier.

L'ensemble des éléments du bloc nécessitant une alimentation électrique sont alimentés par une batterie rechargeable qui est logée à l'intérieur du bloc, de préférence dans ou avec le boîtier.

Avantageusement, le bloc d'anti-franchissement comporte au moins un volume d'accueil pour loger ledit au moins un boîtier, ce volume étant inaccessible de l'extérieur du bloc en position installée du bloc sur le sol.

Le volume d'accueil est par exemple constitué d'une réservation issue de la fabrication du bloc et débouchant sur la face inférieure du bloc, le volume d'accueil comprenant des moyens de fixation et/ou de retenue du boîtier dans le volume d'accueil ou le boîtier étant intégré au bloc lors de la fabrication par moulage. De préférence, le volume d'accueil est obturable, tel que par une plaque de fermeture. La plaque de fermeture ne fait pas saillie par rapport à la face inférieure du bloc.

De préférence, le bloc d'anti-franchissement de l'invention est dépourvu de moyens d'ancrage définitif dans le sol.

De préférence, le bloc présente une extrémité inférieure de contact avec le sol qui est dépourvue d'évidements à fonction de levage, tels des évidements à insertion de griffes de chariots élévateurs.

Selon une caractéristique préférée, le bloc comporte des moyens d'ancrage qui sont configurés pour coopérer avec des moyens de coopération de levage spéciaux, les moyens d'ancrage ne pouvant coopérer mutuellement qu'avec un seul type de moyens de levage qui sont spécifiquement dédiés au type de moyens d'ancrage, de sorte que les moyens d'ancrage ne puissent coopérer avec un système universel de levage/d'accrochage ou un système de levage très commun du type crochet très commun. Ainsi, seuls des moyens de levage/d'accrochage spécifiques, peu courants, peuvent lever le bloc de béton de l'invention. Même si les blocs sont sur la voie publique, il est impossible de les déplacer sans faire appel à des tiers spécialisés ayant à disposition des grues de levage dotées de crochets/outils de levage spécifiques à la coopération avec les moyens d'ancrage du bloc. A titre d'exemple, les moyens d'ancrage sont en forme de sphères ou champignons, du type ceux commercialisés par la société ARTEON.

Le bloc d'anti-franchissement de l'invention possède d'autres fonctionnalités ajoutées à sa fonction d'anti-franchissement. Le bloc peut comporter des réservations spécifiques et/ou des moyens de fixation permettant de rapporter et monter sur le bloc, directement sur place des équipements techniques, comme ceux décrits sans exhaustivité dans la demande de brevet FR3062142.

Avantageusement, ledit au moins un bloc d'anti-franchissement en béton est tel que l'ensemble du bloc est à base de béton, de préférence en béton fibré, ou le bloc présente au moins une enveloppe à base de béton, ou le bloc comporte une coque métallique et un corps intérieur en béton.

Selon une autre caractéristique, le corps du bloc présente des arêtes qui sont biseautées, en particulier le corps possédant une forme générale parallélépipédique et au moins ses arêtes dites verticales en position installée du bloc et celles de la face supérieure et éventuellement les arêtes de tout décrochement de surface, étant biseautées.

Selon encore une autre caractéristique, le corps du bloc de béton comporte au moins deux faces opposées dites inférieure et supérieure, et une paroi périphérique dite paroi latérale reliant les deux faces opposées, la surface externe de la paroi latérale comportant, de préférence sur l'ensemble de sa périphérie et de préférence dans sa partie médiane, une gorge (à fond et parois pleines) formant un décrochement de la surface externe (vers l'intérieur du corps). La gorge (de préférence agencée dans un plan médian horizontal du bloc) s'étend en hauteur, notamment présente une largeur correspondant à environ un tiers de la hauteur du bloc.

Au niveau de la gorge pourront être fixés des équipements techniques, tels qu'une caméra qui sera ainsi à hauteur des plaques d'immatriculation des véhicules passant à proximité du bloc.

Avantageusement, le bloc de béton comporte au moins un système d'éclairage et/ou des moyens de repérage dans la nuit, notamment un catadioptre, en particulier positionné en partie inférieure du bloc en position installée du bloc et apte à éclairer vers le haut, de préférence apte à éclairer avec un angle d'éclairage qui correspond aux deux angles (coins) supérieurs (d'extrémité supérieure) du bloc pour identifier le volume du bloc dans la nuit. De plus, l'invention porte sur un dispositif de gestion d'au moins un bloc d'anti-franchissement de l'invention, et éventuellement de ses équipements techniques, le dispositif comportant au moins un serveur(physique ou virtuel) de centralisation de données apte à communiquer avec le bloc doté des moyens de communication à distance et de moyens électroniques de traitement de données, et au moins une application logicielle communiquant avec le serveur, de préférence au moins une application logicielle maître permettant d'identifier et localiser ledit bloc d'anti-franchissement de l'invention et au moins une application logicielle cliente permettant de dialoguer avec le bloc (via Bluetooth et/ou wifi pour fournir des informations diverses à l'utilisateur de l'application, par exemple en lien avec la ville où sont disposés les blocs ou sur un événement).

Par conséquent, l'invention est relative à une nouvelle utilisation de moyens de communication à distance, cette utilisation étant caractérisée en ce que les moyens de communication à distance sont intégrés à un bloc en béton d'anti-franchissement, d'anti-intrusion de véhicules, en particulier en extérieur dans des lieux de circulation de personnes et de véhicules.

La présente invention est maintenant décrite à l'aide d'exemples uniquement illustratifs et nullement limitatifs de la portée de l'invention, et à partir des illustrations jointes, dans lesquelles :
- La figure 1 est une vue en perspective d'un bloc d'anti-franchissement selon l'invention.
- La figure 2 est une vue de côté du bloc de la figure 1, illustrant en pointillés l'intérieur du bloc pour le logement d'un boîtier connecté.

Le bloc d'anti-franchissement 1 de l'invention illustré sur les figures constitue de manière combinée à sa fonction d'anti-franchissement, un objet connecté.

Le bloc de béton 1 de l'invention illustré sur les figures est un bloc de béton plein, de masse conséquente, en particulier de l'ordre de 500 kg jusqu'au-delà d'une tonne, destiné avant tout à constituer un bloc anti-franchissement pour les véhicules.

Le bloc de béton est de préférence constitué de béton fibré. Il peut présenter éventuellement une coque externe telle que métallique et dans laquelle est coulé le béton.

L'allure du bloc 1 est du type de celle décrite dans la demande de brevet FR3062142 ou WO2018138276 qui est intégrée par référence à la présente demande de brevet.

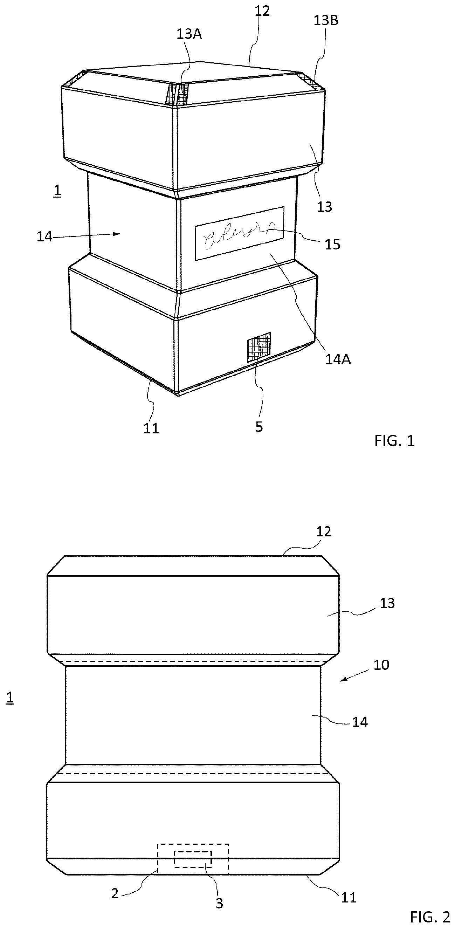

En regard des figures 1 et 2, le bloc de béton 1 comporte un corps 10 cylindrique, et comprenant une face inférieure 11, une face opposée supérieure 12, et une paroi latérale périphérique verticale 13 reliant les deux faces 11 et 12. La base du corps cylindrique est de préférence polygonale mais pourrait être ronde, ovale...Selon un exemple préféré, le corps est de forme parallélépipédique à base carrée ou rectangulaire, la paroi périphérique 13 comprenant quatre faces verticales.

De préférence, le corps 10 du bloc comporte sur sa paroi latérale 13 en la ceinturant et dans sa partie médiane, une réservation 14 formant une gorge périphérique. Cette gorge périphérique 14 comprend un fond 14A qui est donc situé dans un plan parallèle et décalé par rapport au plan externe de la paroi latérale 13.

La réservation 14 peut servir par exemple de support à une signalétique, telle qu'une plaque 15, la plaque pouvant notamment être recouverte d'un film à micro prismes et à très forte rétro réflectivité. La réservation 14 est avantageusement à, ou sensiblement à, la hauteur correspondante d'une plaque d'immatriculation pour voiture. Ainsi, les blocs 1 de l'invention sont aisément repérables dans la nuit par l'éclairage des véhicules automobiles circulant. Avantageusement, la face inférieure 11 est totalement plate de sorte qu'en position installée sur le sol, il est impossible de soulever le bloc à partir de sa base.

Comme visible dans le mode de réalisation illustré, le bloc est parallélépipédique à base carrée et est symétrique par rapport à au plan horizontal médian.

De préférence, les arêtes du corps 10, délimitant les faces inférieure 10 et supérieure 11, les faces verticales de la paroi latérale 13, et la gorge 14, sont biseautées (à pans inclinés) et/ou arrondies de manière à éviter des arêtes vives qui sinon risqueraient de blesser, d'autant plus que le bloc peut présenter une hauteur de presque à hauteur d'homme.

De préférence, le bloc de béton 1 comporte en regard de la figure 2, un système d'éclairage S, notamment un catadioptre, qui est en particulier positionné en partie inférieure du bloc et est apte à éclairer vers le haut de façon à éclairer avec un angle d'éclairage correspondant à deux coins supérieurs 13A et 13B du bloc pour identifier le volume du bloc dans la nuit.

De préférence, les dimensions du bloc 1 sont prévues pour pouvoir maximiser leur nombre dans un camion de transport de 10 tonnes.

A titre d'exemple nullement limitatif, les dimensions d'un bloc 1 de l'invention parallélépipédique à base carrée ou rectangulaire, sont les suivantes :
- Hauteur : 900 ou 950 mm
- Largeur et longueur : 900 ou 950 mm x 900 mm ou 950 mm pour une basse carrée, et 600 mm x 900 mm pour une base rectangulaire,
- Hauteur de la gorge 13 : 200 ou 210 mm,
- Profondeur de la gorge (dimension dans un plan horizontal) : de l'ordre de 50 mm.

Selon l'invention, le bloc 1 comporte au moins une réservation ou un volume d'accueil en partie inférieure et débouchant sur la face inférieure du bloc pour être inaccessible en position installée du bloc sur la voirie. Ce volume d'accueil est de préférence obturable. Selon l'invention, le bloc 1 comporte au moins un boîtier 3 logeant des moyens de communication à distance, en particulier pour se connecter à Internet, afin de constituer un objet connecté. Le boîtier est apte à se loger dans le volume d'accueil 2.

De préférence, le bloc 1 comporte en outre des moyens de géolocalisation.

De préférence, le bloc 1 comporte également des moyens d'identification du bloc, de préférence à distance, afin de pouvoir tracer le bloc. Le bloc 1 comporte par exemple un tag NFC.

Le bloc peut être équipé d'éléments à fonction technique qui sont aptes à communiquer avec les moyens de communication à distance pour transmettre ou recevoir des données qui sont associées auxdits éléments techniques.

De manière nullement limitative, les éléments à fonction technique sont des capteurs, des caméras, des systèmes d'affichage, des haut-parleurs qui sont destinés à être connectés aux moyens de communication à distance du bloc.

Par exemple, le bloc est équipé d'au moins une caméra (par exemple via un mât fixé sur le bloc) qui est apte à communiquer de manière filaire ou sans fil avec des moyens électroniques de traitement logés à l'intérieur du bloc, de préférence dans le boîtier logeant les moyens de communication à distance. Les données (images) de l'environnement du bloc peuvent ainsi être envoyées sur un serveur via les moyens de communication à distance.

Le bloc d'anti-franchissement 1 comporte par exemple en tant que capteur, un capteur de mouvement, permettant de détecter le déplacement du bloc. Le capteur en étant relié aux moyens de communication à distance, il est ainsi possible de détecter à distance que le bloc est bougé.

Le bloc d'anti-franchissement 1 est apte à communiquer avec un serveur distant (physique ou virtuel) et de centralisation de données. En outre, des applications logicielles en relation avec le ou les blocs sont prévues. Une application logicielle maître permet d'identifier et localiser les blocs d'anti-franchissement. Une application logicielle cliente permet de dialoguer avec le bloc et, via la détection du bloc, de visualiser par exemple sur son smartphone ou tablette des informations diverses sur un lieu, un événement, etc.

## Revendications

1. Bloc de béton de protection et d'anti-franchissement pour véhicules (1) comprenant des moyens d'ancrage pour lever le bloc, **caractérisé en ce qu'**il comporte des moyens de communication à distance sans fil, pour se connecter à un réseau Internet.

2. Bloc de béton de protection et d'anti-franchissement selon la revendication 1, **caractérisé en ce qu'**il comporte des moyens électroniques de traitement de données combinés aux moyens de communication afin de traiter les données reçues ou envoyées auxdits moyens de communication.

3. Bloc de béton de protection et d'anti-franchissement selon la revendication 1 ou 2, **caractérisé en ce qu'**il comporte un système de géolocalisation.

4. Bloc de béton de protection et d'anti-franchissement selon l'une quelconque des revendications précédentes, **caractérisé en ce qu'**il comporte des moyens d'identification dudit bloc d'anti-franchissement, de préférence une étiquette électronique du type tag NFC.

5. Bloc de béton de protection et d'anti-franchissement selon l'une quelconque des revendications précédentes, **caractérisé en ce qu'**il comporte des moyens de détection de mouvement dudit bloc, et **en ce que** les moyens de détection de mouvement sont aptes à communiquer avec les moyens de communication à distance sans fil dudit bloc qui sont aptes à transmettre à distance que le bloc est en train d'être déplacé.

6. Bloc de béton de protection et d'anti-franchissement selon l'une quelconque des revendications précédentes, **caractérisé en ce qu'**il comporte au moins un boîtier, amovible par rapport à un logement d'accueil dans le bloc ou bien intégré au bloc lors de la fabrication, constituant un logement de protection pour les moyens de communication à distance et toute électronique embarquée, de préférence ce volume étant inaccessible de l'extérieur du bloc en position installée du bloc sur le sol.

7. Bloc de béton de protection et d'anti-franchissement selon la revendication précédente, **caractérisé en ce que** le volume d'accueil, de préférence obturable, est constitué d'une réservation issue de la fabrication du bloc et débouchant sur la face inférieure du bloc destinée à être en contact avec le sol, le volume d'accueil comprenant des moyens de fixation et/ou de retenue du boitier dans le volume d'accueil, ou le boitier étant intégré au bloc lors de sa fabrication par moulage.

8. Bloc de béton de protection et d'anti-franchissement selon l'une quelconque des revendications précédentes, **caractérisé en ce que** l'ensemble des éléments du bloc nécessitant une alimentation électrique sont alimentés par une batterie qui est logée à l'intérieur du bloc, de préférence dans ou avec le boîtier.

9. Bloc de béton de protection et d'anti-franchissement selon l'une quelconque des revendications précédentes, **caractérisé en ce que** ledit au moins un bloc de béton de protection et d'anti-franchissement (1) est tel que l'ensemble du bloc est à base de béton fibré, ou le bloc comporte une coque métallique et un corps intérieur en béton.

10. Bloc de béton de protection et d'anti-franchissement selon l'une quelconque des revendications précédentes, **caractérisé en ce qu'**il comporte des équipements à base d'électronique procurant des fonctions techniques, les équipements étant tels qu'un réseau de diffusion wifi public, des capteurs, des caméras, des alarmes, des haut-parleurs permettant de diffuser des messages audio à distance, des affichages électroniques, des éclairages.

11. Bloc de béton de protection et d'anti-franchissement selon l'une quelconque des revendications précédentes, **caractérisé en ce que** le corps du bloc de béton comporte au moins deux faces opposées dites inférieure et supérieure, et une paroi périphérique dite paroi latérale reliant les deux faces opposées, la surface externe de la paroi latérale comportant, de préférence sur l'ensemble de sa périphérie et de préférence dans sa partie médiane, une gorge formant un décrochement de la surface externe.

12. Bloc de béton de protection et d'anti-franchissement selon l'une quelconque des revendications précédentes, **caractérisé en ce que** le corps dudit au moins un bloc d'anti-franchissement (1) présente des arêtes qui sont biseautées, en particulier le corps possédant une forme générale parallélépipédique et au moins ses arêtes dites verticales en position installée du bloc et celles de la face supérieure et éventuellement les arêtes de tout décrochement de surface, étant biseautées.

13. Dispositif de gestion d'au moins un bloc de béton de protection et d'anti-franchissement selon l'une quelconque des revendications précédentes, et éventuellement de ses équipements techniques, le dispositif de gestion comportant au moins un serveur de centralisation de données apte à communiquer avec le bloc doté des moyens de communication à distance et de moyens électroniques de traitement de données, et au moins une application logicielle communiquant avec le serveur, de préférence au moins une application logicielle maître permettant d'identifier et localiser ledit bloc d'anti-franchissement de l'invention et au moins une application logicielle cliente permettant de dialoguer avec le bloc.

## Patentansprüche

1. Schutz- und Anti-Durchbrechungsbetonblock für Fahrzeuge (1), umfassend Verankerungsmittel zum Anheben des Blocks,
**dadurch gekennzeichnet, dass** er drahtlose Fernkommunikationsmittel vorweist, um mit einem Internetnetzwerk verbunden zu werden.

2. Schutz- und Anti-Durchbrechungsbetonblock nach Anspruch 1,
**dadurch gekennzeichnet, dass** er elektronische Datenverarbeitungsmittel, die mit den Kommunikationsmitteln kombiniert sind, vorweist, um die Daten zu verarbeiten, die an den Kommunikationsmitteln empfangen oder von diesen gesendet werden.

3. Schutz- und Anti-Durchbrechungsbetonblock nach Anspruch 1 oder 2, **dadurch gekennzeichnet, dass** er ein Geolokalisierungssystem vorweist.

4. Schutz- und Anti-Durchbrechungsbetonblock nach einem der vorstehenden Ansprüche, **dadurch gekennzeichnet, dass** er Identifikationsmittel des Anti-Durchbrechungsblocks, vorzugsweise ein elektronisches Etikett des Typs NFC-Tag, vorweist.

5. Schutz- und Anti-Durchbrechungsbetonblock nach einem der vorstehenden Ansprüche, **dadurch gekennzeichnet, dass** er Bewegungserkennungsmittel des Blocks vorweist und **dadurch, dass** die Bewegungserkennungsmittel geeignet sind, um mit den drahtlosen Fernkommunikationsmitteln des Blocks zu kommunizieren, die geeignet sind, um aus der Ferne zu übermitteln, dass der Block gerade versetzt wird.

6. Schutz- und Anti-Durchbrechungsbetonblock nach einem der vorstehenden Ansprüche, **dadurch gekennzeichnet, dass** er mindestens ein Gehäuse, das relativ zu einem Aufnahmesitz in dem Block abnehmbar ist oder während der Herstellung in den Block integriert wird, das eine Schutzaufnahme für die Fernkommunikationsmittel und die gesamte Bordelektronik bildet, vorweist, vorzugsweise wobei dieses Volumen von außerhalb des Blocks, in der installierten Position des Blocks auf dem Boden, unzugänglich ist.

7. Schutz- und Anti-Durchbrechungsbetonblock nach dem vorstehenden Anspruch, **dadurch gekennzeichnet, dass** das Aufnahmevolumen, vorzugsweise verschließbar, aus einer Aussparung gebildet ist, die bei der Herstellung des Blocks entsteht und auf eine untere Fläche des Blocks mündet, die dazu bestimmt ist, mit dem Boden in Kontakt zu stehen, das Aufnahmevolumen umfassend Befestigungsmittel und/oder Haltemittel für das Gehäuse in dem Aufnahmevolumen, oder wobei das Gehäuse bei seiner Herstellung durch Formgießen in den Block integriert wird.

8. Schutz- und Anti-Durchbrechungsbetonblock nach einem der vorstehenden Ansprüche, **dadurch gekennzeichnet, dass** die gesamten Elemente des Blocks, die eine Elektrizitätsversorgung benötigen, durch eine Batterie versorgt werden, die im Inneren des Blocks untergebracht ist, vorzugsweise in dem oder mit dem Gehäuse.

9. Schutz- und Anti-Durchbrechungsbetonblock nach einem der vorstehenden Ansprüche, **dadurch gekennzeichnet, dass** der mindestens eine Schutz- und Anti-Durchbrechungsbetonblock (1) derart ist, dass der gesamte Block auf Faserbeton basiert oder der Block eine Metallverschalung und einen Innenkörper aus Beton vorweist.

10. Schutz- und Anti-Durchbrechungsbetonblock nach einem der vorstehenden Ansprüche, **dadurch gekennzeichnet, dass** er Ausrüstungen auf elektronischer Basis vorweist, die technische Funktionen bereitstellen, wobei die Ausrüstungen beispielsweise ein öffentliches Wifi-Übertragungsnetz, Sensoren, Kameras, Alarmvorrichtungen, Lautsprecher sind, die ein Fernübertragen von Audionachrichten, elektronischen Anzeigen, Beleuchtungen ermöglichen.

11. Schutz- und Anti-Durchbrechungsbetonblock nach einem der vorstehenden Ansprüche, **dadurch gekennzeichnet, dass** der Körper des Betonblocks hat mindestens zwei gegenüberliegende Flächen, die als eine untere und eine obere bezeichnet werden, und eine Umfangswand, die als Seitenwand bezeichnet wird und die zwei gegenüberliegenden Flächen verbindet, vorweist, wobei die Außenoberfläche der Seitenwand vorzugsweise über ihren gesamten Umfang und vorzugsweise in ihrem mittleren Teil, eine Nut, die einen Rücksprung der Außenoberfläche ausbildet, vorweist.

12. Schutz- und Anti-Durchbrechungsbetonblock nach einem der vorstehenden Ansprüche, **dadurch gekennzeichnet, dass** der Körper des mindestens einen Anti-Durchbrechungsblocks (1) Kanten aufweist, die abgeschrägt sind, insbesondere wobei der Körper eine allgemeine quaderförmige Form besitzt und mindestens seine Kanten, die in der installierten Position des Blocks als vertikal bezeichnet werden, und die der oberen Fläche und gegebenenfalls die Kanten des gesamten Rücksprungs der Oberfläche abgeschrägt sind.

13. Verwaltungsvorrichtung mindestens eines Schutz- und Anti-Durchbrechungsbetonblocks nach einem der vorstehenden Ansprüche und gegebenenfalls seiner technischen Ausrüstungen, wobei die Verwaltungsvorrichtung mindestens einen Datenzentralisierungsserver, der geeignet ist, um mit dem mit Fernkommunikationsmitteln ausgestatteten Block zu kommunizieren und elektronische Datenverarbeitungsmittel und mindestens eine Softwareanwendung, die mit dem Server kommuniziert, vorzugsweise mindestens eine Master-Softwareanwendung, die es ermöglicht, den Anti-Durchbrechungsbetonblock der Erfindung zu identifizieren und lokalisieren, und mindestens eine Client-Softwareanwendung vorweist, die den Dialog mit dem Block ermöglicht.

## Claims

1. A concrete access-denial bollard (1) for vehicles comprising anchoring means for lifting the bollard, **characterized in that** it comprises means of wireless remote communication, for connecting to an Internet network.

2. The concrete access-denial bollard according to claim 1,
**characterized in that** it comprises electronic data processing means combined with the communication means in order to process the data received from or sent to said communication means.

3. The concrete access-denial bollard according to either claim 1 or 2, **characterized in that** it comprises a geolocation system.

4. The concrete access-denial bollard according to any of the preceding claims, **characterized in that** it comprises means for identifying said access-denial bollard, preferably an electronic tag of the NFC tag type.

5. The concrete access-denial bollard according to any of the preceding claims, **characterized in that** it comprises means for detecting movement of said bollard, and it that the movement detection means are capable of communicating with the wireless remote communication means of said bollard, which are capable of remotely transmitting that the bollard is being moved.

6. The concrete access-denial bollard according to any of the preceding claims, **characterized in that** it comprises at least one casing which is removable with respect to a receiving housing in the bollard or integrated into the bollard during manufacture and constitutes a protective housing for the means of remote communication and any built-in electronics, this volume preferably being inaccessible from outside the bollard when the bollard is in the installed position on the ground.

7. The concrete access-denial bollard according to the preceding claim, **characterized in that** the receiving volume, which is preferably sealable, consists of a blockout which results from the manufacture of the bollard and opens onto the lower face of the bollard intended to be in contact with the ground, the receiving volume comprising means for fastening and/or retaining the casing in the receiving volume, or the casing being integrated into the bollard during manufacture by molding.

8. The concrete access-denial bollard according to any of the preceding claims, **characterized in that** all of the elements of the bollard which require an electrical power supply are powered by a battery which is accommodated inside the bollard, preferably in or with the casing.

9. The concrete access-denial bollard according to any of the preceding claims, **characterized in that** said at least one concrete access-denial bollard (1) is such that the entire bollard is based on fiber-reinforced concrete, or the bollard has a metal shell and a concrete inner body.

10. The concrete access-denial bollard according to any of the preceding claims, **characterized in that** it comprises electronics-based equipment which provides technical functions, the equipment being equipment such as a public Wi-Fi broadcasting network, sensors, cameras, alarms, loudspeakers for broadcasting remote audio messages, electronic displays, and lighting.

11. The concrete access-denial bollard according to any of the preceding claims, **characterized in that** the body of the concrete bollard comprises at least two opposite faces, referred to as lower and upper, and a peripheral wall referred to as the side wall connecting the two opposite faces, the outer surface of the side wall comprising, preferably over its entire periphery and preferably in its middle part, a groove forming an indentation in the external surface.

12. The concrete access-denial bollard according to any of the preceding claims, **characterized in that** the body of said at least one access-denial bollard (1) has edges which are beveled, the body in particular having a parallelepipedal general shape and at least the edges thereof referred to as vertical when the bollard is in the installed position, the edges of the upper face, and optionally the edges of any surface indentation being beveled.

13. A device for managing at least one concrete access-denial bollard according to any of the preceding claims, and optionally its technical equipment, the management device comprising at least one server for centralizing data capable of communicating with the bollard provided with remote communication means and electronic data processing means, and at least one software application that communicates with the server, preferably at least one master software application which makes it possible to identify and locate said access-denial bollard of the invention and at least one client software application which allows communication with the bollard.
